**Europäisches Patentamt**

**European Patent Office**

**Office européen des brevets**

(11) Numéro de publication: **0 135 455**
**B1**

(12) **FASCICULE DE BREVET EUROPÉEN**

(45) Date de publication du fascicule du brevet:
**02.11.88**

(21) Numéro de dépôt: **84420135.0**

(22) Date de dépôt: **09.08.84**

(51) Int. Cl.⁴: **F 01 N 7/18,** F 01 N 1/08,
F 01 N 1/24, F 01 N 1/02

(54) Dispositif d'échappement pour moteur à combustion interne.

(30) Priorité: **18.08.83** FR 8313686

(43) Date de publication de la demande:
**27.03.85 Bulletin 85/13**

(45) Mention de la délivrance du brevet:
**02.11.88 Bulletin 88/44**

(84) Etats contractants désignés:
**AT BE CH DE FR GB IT LI LU NL SE**

(56) Documents cité:
**CA-A-967 012**
**CH-A-447 718**
**FR-A-1 314 217**
**FR-A-1 515 158**
**GB-A-312 200**
**US-A-3 197 955**
**US-A-3 247 665**

(73) Titulaire: **Gerlier, Marcelle Simone Félicienne,
Villa Mona Lisa 52 Boulevard Berthie Albrecht,
F-83120 Sainte Maxime (FR)**

(72) Inventeur: **Gerlier, Marcelle Simone Félicienne,
Villa Mona Lisa 52 Boulevard Berthie Albrecht,
F-83120 Sainte Maxime (FR)**

(74) Mandataire: **Maureau, Pierre, Cabinet GERMAIN &
MAUREAU B.P. 3011, F-69392 Lyon Cédex 03 (FR)**

## Description

"Dispositif d'échappement pour moteur à combustion interne"

La présente invention concerne un dispositif d'échappement pour moteur à combustion interne.

Les dispositifs d'échappement actuellement utilisés comprennent généralement une tubulure en acier dont un premier tronçon relie le collecteur à un premier pot appelé pot de détente, et dont un deuxième tronçon relie le pot de détente à un deuxième pot appelé silencieux disposé à l'extrémité postérieure du véhicule.

Le pot de détente a pour fonction de ralentir les gaz et, pour cela, il comporte des chicanes qui créent des turbulences. Le silencieux a pour fonction d'étouffer le son provoqué par l'évacuation à l'air libre des gaz brûlés du moteur et, à cet effet, il contient une matière feutrante comme de la laine de roche. Ces dispositifs sont suspendus, par des organes souples, à la face inférieure de la caisse du véhicule. Les tubulures sont en acier et les pots, qui sont le plus souvent de forme cylindrique, sont en tôle d'acier et sont assemblés par soudure et/ou rivets. Les vibrations s'ajoutant à l'effet corrosif des gaz brûlés et de la condensation, ces dispositifs se détériorent rapidement et nécessitent donc de fréquents changements, ce qui renchérit considérablement le coût de l'entretien des véhicules automobiles. En outre, leur position en saillie sous la caisse du véhicule les rend très vulnérables.

On connaît, par les brevets GB-A-360 540 et DE-B-1 113 119, des dispositifs d'échappement conçus de manière à éliminer ces inconvénients. Dans ces dispositifs, les deux pots sont en une matière moulée résistant à la corrosion des gaz brûlés, chaque pot étant équipé d'un couvercle amovible susceptible de lui être fixé par tout moyen approprié.

Grâce à cette disposition, non seulement les deux pots sont réalisés de manière durable mais, en outre, il est possible de leur donner toute conformation désirée adaptée à la face inférieure de la caisse du véhicule leur procurant une position plus escamotée et par conséquent moins vulnérable que dans les dispositifs traditionnels. De plus, les chicanes du premier pot ou pot de détente venues de moulage avec son corps ont une tenue inaltérable.

La présente invention concerne un perfectionnement à ce dernier type de dispositif, perfectionnement qui vise plus particulièrement le deuxième pot ou silencieux et qui met a profit sa structure moulée indéformable et son couvercle amovible.

A cet effet, l'intérieur du deuxième pot ou silencieux est divisé en trois zones, une zone centrale destinée à recevoir la matière feutrante, et deux zones latérales constituant les collecteurs d'arrivée et de départ des gaz brûlés, jouant en outre le rôle de résonateurs. Dans ce cas, avantageusement, la matière feutrante est constituée par une cartouche préformée, pourvue de canaux transversaux faisant communiquer entre eux les deux collecteurs.

De préférence, la cartouche amovible de matière feutrante est constituée par un bloc de laine de roche ou de fibres d'aluminium logé dans un boîtier léger, et les canaux transversaux sont habillés intérieurement de tubulures dont la paroi cylindrique est percée d'orifices.

Ainsi, la matière feutrante du silencieux peut facilement être remplacée lorsque, surchargée de calamine ou autre, elle est devenue inopérante.

Suivant une forme d'exécution perfectionnée de ce dispositif, d'une part, la masse feutrante de la cartouche interchangeable est imprégnée d'un élément catalyseur de la combustion, tel que de la mousse ou du noir de platine, dont la fonction est d'assurer la combustion des imbrûlés éventuellement contenus dans les gaz d'échappement, avant la sortie du dispositif d'échappement et sans apport de calories et, d'autre part, les canaux transversaux reliant entre eux les collecteurs d'entrée et de sortie sont fermés à l'une de leurs extrémités de manière qu'une moitié d'entre eux débouche dans le collecteur d'entrée et l'autre moitié dans le col lecteur de sortie.

Ainsi, pour passer du collecteur d'entrée au collecteur de sortie, les gaz d'échappement sont obligés de cheminer à travers la masse feutrante, entre un canal transversal débouchant dans le collecteur d'entrée et un canal transversal débouchant dans le collecteur de sortie, ce qui les oblige à lécher le catalyseur dont la masse feutrante est imprégnée et favorise ainsi la combustion des imbrûlés éventuels.

Pour faciliter le cheminement des gaz dans la masse feutrante, suivant une forme d'exécution préférée de l'invention, les canaux transversaux sont disposés de manière à ce que chaque canal transversal débouchant dans un collecteur soit plus éloigné d'un autre canal transverversal débouchant dans le même collecteur que d'un canal transversal débouchant dans l'autre collecteur.

Dans le cas où, par exemple, tous les canaux transversaux sont alignés suivant une même rangée, ils sont disposés de manière à déboucher directement et alternativement dans l'un et dans l'autre collecteur.

La masse feutrante est avantageusement constituée par de la fibre d'alumine qui peut facilement être imprégnée de noir de platine.

Suivant une autre caractéristique intéressante de l'invention, pour favoriser la combustion des imbrûlés au contact du catalyseur par un apport d'oxygène et, simultanément, réduire la température des gaz, il est prévu, en amont du deuxième pot ou silencieux, une entrée d'air frais.

De préférence, cette entrée d'air frais est située en amont du premier pot ou pot de détente. Cette entrée d'air frais est avantageusement agencée pour fonctionner

suivant le principe de Venturi.

De toute façon, l'invention sera bien comprise et d'autres caractéristiques ressortiront, à l'aide de la description qui suit, en référence au dessin schématique annexé représentant, à titre d'exemples non limitatifs, quelques formes d'exécution des deux pots de ce dispositif:

Figure 1 montre schématiquement l'ensemble d'un dispositif d'échappement;

Figure 2 est une vue en perspective éclatée du deuxième pot ou silencieux;

Figure 3 est une vue en plan par-dessous, partiellement écorchée, du silencieux, après retrait de son couvercle et illustrant une variante d'exécution de sa cartouche feutrante;

Figure 4 est une vue en perspective de la cartouche feutrante du silencieux de figure 3;

Figures 5 à 8 sont des vues en perspective illustrant diverse formes d'éxécution en une seule pièce des deux pots.

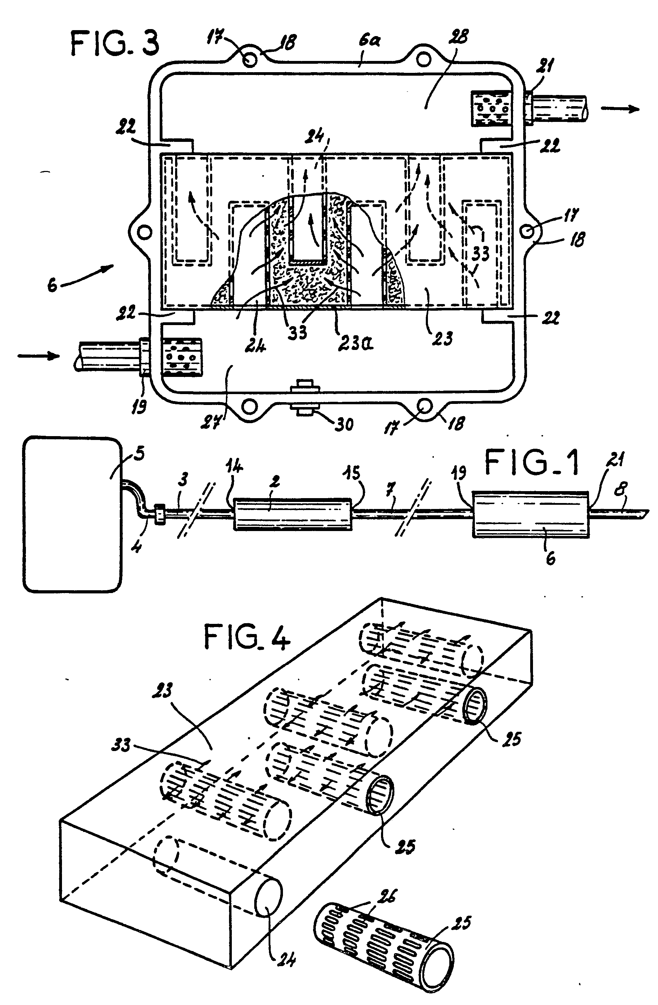

Le dispositif échappement de l'invention est du type comprenant, comme illustré sur la figure 1, un premier pot (2) ou pot de détente dont l'orifice d'entrée est destiné à être raccordé, par un tronçon de tubulure d'échappement (3), au col lecteur d'échappement (4) du moteur (5) associé, et un deuxième pot ou silencieux (6) dont l'orifice d'entrée est relié, par un deuxième tronçon de tubulure d'échappement (7), à l'orifice de sortie du pot de détente (2) et dont l'orifice de sortie (21) est relié à l'air libre par un troisième tronçon de tubulure échappement (8).

Comme le montre la figure 2, le deuxième pot ou silencieux (6) de ce dispositif comprend un corps (6a) et un couvercle (6b) réalisés par moulage, en une matière résistant à l'effet corrosif des gaz brûlés et à la température et présentant de bonnes qualités d'insonorisation. C'est pourquoi ces deux éléments sont avantageusement réalisés en un alliage d'aluminium, magnésium ou silicium.

Le couvercle (6b) est apte à être assemblé au corps (6a) à l'aide de vis traversant des oreilles percées (16) ménagées à la périphérie du couvercle (6b) et engageables dans des trous taraudés (17) ménagés dans des bossages externes (18) solidaires des parois latérales et d'extrémité du corps (6a).

Chacune des parois d'extrémité du corps (6a) porte un raccord, respectivement, d'entrée (19) destiné à être relié, par la tubulure (7), à l'orifice de sortie (15) du pot de détente (2), et de sortie (21) destiné à être relié à la tubulure de sortie (8) ou tubulure de mise à l'air libre des gaz d'échappement.

Comme le montre cette figure 2, les parois d'extrémité du corps (6a) portent chacune deux pattes (22) destinées au positionnement d'une cartouche (23) de matière feutrante dont la fonction est d'étouffer les bruits des gaz traversant le silencieux (6). Les pattes (22) sont positionnées de manière qu'après sa mise en place, la cartouche (23) délimite deux zones latérales constituant, respectivement, le collecteur d'entrée (27) avec lequel communique le raccord d'entrée (19), et une zone (28) constituant le collecteur de sortie avec lequel communique le raccord de sortie (21). Outre leur rôle de collecteurs, les deux zones latérales jouent aussi le rôle de résonateurs.

Cette cartouche feutrante (23) est avantageusement réalisée par un bloc parallélépipédique rectangle de laine de roche ou autre, logé dans un boîtier parallélépipédique léger (23a) qui assure son maintien en forme et dont les dimensions sont adaptées à lécartement des pattes (22) du corps (6a) du silencieux (6) et à la hauteur de ses parois latérales et d'extrémité. Ce bloc de laine de roche présente des canaux transversaux (24) destinés à faire communiquer le collecteur d'entrée (27) avec le collecteur de sortie (28) et dont chacun est habillé intérieurement par un élément tubulaire (25) dont la paroi cylindrique présente des lumières longitudinales (26) dont la présence est destinée à permettre l'amortissement des bruits par la masse de laine de roche.

Le fait de pouvoir facilement retirer le couvercle (6b) du silencieux (6) permet de fréquents remplacements de sa cartouche interchangeable (23), ce qui procure à ce silencieux une bien meilleure longévité qu'avec les silencieux habituels. En effet, la cartouche (23) a non seulement pour effet d'amortir les sons des gaz brûlés mais aussi de retenir l'humidité et toutes les impuretés qui les accompagnent.

Il en résulte donc un colmatage relativement rapide de la laine de roche qui constitue généralement l'élément feutrant des silencieux traditionnels, et le fait de pouvoir remplacer une cartouche (23) colmatée par une cartouche neuve permet de prolonger la durée de vie du silenscieux, d'autant plus que ce dernier est en matériau résistant bien mieux à l'oxydation que la tôle d'acier généralement utilisée pour la fabrication des silencieux habituels.

Le silencieux représenté sur la figure 3 et dont seul le corps (6a) est visible sur cette figure, est du même type que celui illustré sur la figure 2. Par consequent, comme dans l'exemple précédent, le volume intérieur de ce silencieux est divisé par des pattes (22) en trois zones comprenant, au centre, l'emplacement d'une cartouche (23), et deux collecteurs latéraux, un collecteur d'entrée (27) avec lequel communique le raccord d'entrée (19), et un collecteur de sortie (28) avec lequel communique le raccord de sortie (21).

Comme dans l'exemple précédent, les bossages (18) prévus à la périphérie du corps (6a) de ce silencieux et présentant, en leur centre, un trou taraudé (17), sont destinés à permettre la fixation du couvercle, non représenté sur cette figure.

Dans cet exemple, la masse feutrante de la cartouche interchangeable (23), qui a la forme d'un bloc parallélépipédique rectangle et qui, comme dans l'exemple précédent, en vue de son maintien en forme est placée dans un boîtier léger (23a), est imprégnée d'un catalyseur dont la présence a pour effet de favoriser la combustion des éventuels imbrûlés contenus dans les gaz d'échappement qui pénètrent dans le silencieux par le raccord d'entrée (19) et cela, avant que ces gaz ne soient rejetés à l'air libre par l'orifice de sortie (21).

Suivant une autre caractéristique de l'invention qui a pour but d'obliger les gaz d'échappement à lécher la masse feutrante par cheminement à travers elle, comme illustré par les flèches (33), les canaux transversaux (24) prévus dans la cartouche interchangeable (23), avec leur habillage intérieur constitué par un élément tubulaire (25) dont la paroi est perforée de lumières (26) autorisant le passage des gaz, ne débouchent que sur un côté de la cartouche (23). En outre, la moitié des canaux débouche dans le collecteur d'entrée (27), tandis que l'autre moitié débouche dans le collecteur de sortie (28) et leur disposition est telle que chaque canal transversal (24) associé à l'un des collecteurs (27) ou (28) soit situé entre deux canaux transversaux débouchant dans l'autre collecteur (28, 27).

Dans l'exemple illustré sur les figures 3 et 4, tous les canaux (24) sont alignés suivant une rangée et un sur deux débouche dans le collecteur d'entrée (27), tandis que les autres débouchent dans le collecteur de sortie (28). Dans cet exemple, la longueur de chaque canal transversal (24) est de l'ordre des deux tiers de la largeur de la cartouche feutrante (23). Les flèches (33) illustrent le cheminement des gaz à l'intérieur de la masse feutrante de la cartouche (23) et montrent bien que cette disposition favorise leur contact avec le catalyseur dont la masse feutrante est imprégnée.

Ce catalyseur est avantageusement constitué, comme cela est connu en soi, par de la mousse ou du noir de platine.

La masse feutrante imprégnée de catalyseur peut évidemment être de la laine de roche. Cependant, elle est anantageusement constituée par de la fibre d'alumine imprégnée de noir de platine.

Par ailleurs, pour favoriser la combustion catalytique, par un apport d'oxygène, il est prévu, dans ce dispositif d'échappement, une entrée d'air frais située soit, comme illustré en (30), au niveau du collecteur d'entrée (27) du silencieux (6), soit, de préférence, en amont de ce silencieux ou même en amont du pot de détente. Cette entrée d'air (30) peut être agencée pour fonctionner suivant le principe de Venturi.

Le flux d'air frais ainsi mélangé aux gaz d'échappement présente l'avantage d'en réduire la température.

Cette cartouche (23) ne peut évidemment être utilisée qu'avec des gaz d'échappement provenant de carburants autorisant une combustion catalytique des imbrûlés et, notamment, des essences sans plomb, car la présence de plomb détruirait les catalyseurs par empoisonnement.

Par conséquent, son caractère d'interchangeabilité est particulièrement intéressant lorsque l'utilisateur change de carurant.

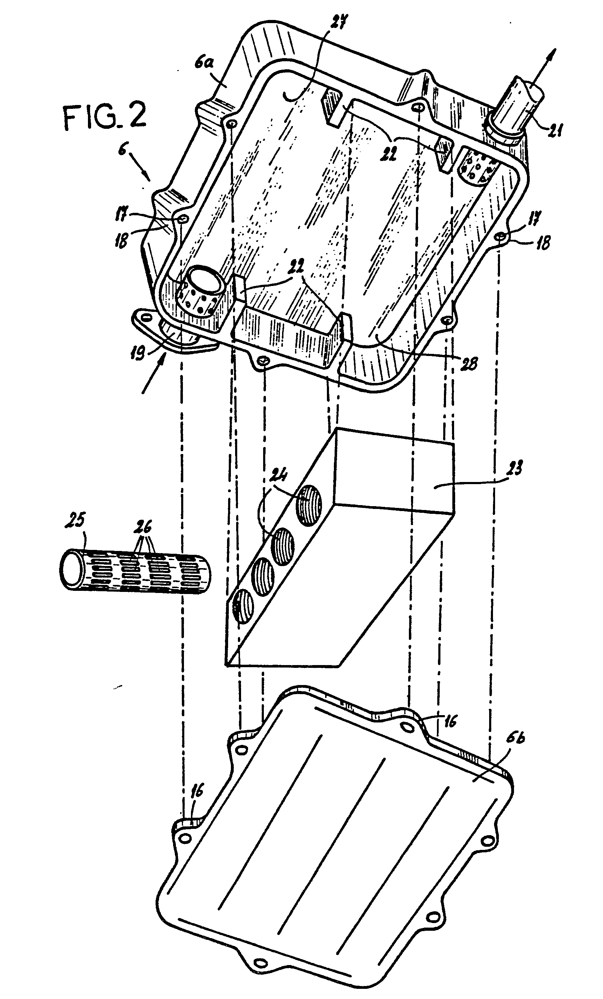

Dans l'exemple précédemment décrit et illustré par les figures 1 à 4, le silencieux (6) est réalisé isolément et il est relié au pot de détente (2) par un tronçon de tubulure (7). Les ensembles illustrés par les figures 5 à 8 visent à permettre l'élimination de la tubulure (7) et la réalisation des deux pots en un seul ensemble, les corps (2a) et (6a) des deux pots (2) et (6) étant réalisés en une seule pièce.

Dans l'exemple illustré sur la figure 5, les corps (2a) du pot de détente (2) et (6a) du silencieux (6) sont disposés côte à côte, c'est-à-dire qu'ils comportent une paroi longitudinale ou latérale commune présentant, à l'une de ses extrémités, un orifice (29) constituant à la fois l'orifice de sortie du pot de détente et l'orifice d'entrée du pot du silencieux, et rend donc inutile toute adaptation de raccords. Les seuls raccordements à réaliser concernent la tubulure (3) à l'orifice d'entrée (14) du pot de détente (2) et la tubulure (8) à l'orifice de sortie (21) du silencieux (6). Les ailettes (9) du pot de détente (2) sont obtenues directement de moulage avec son corps (2a).

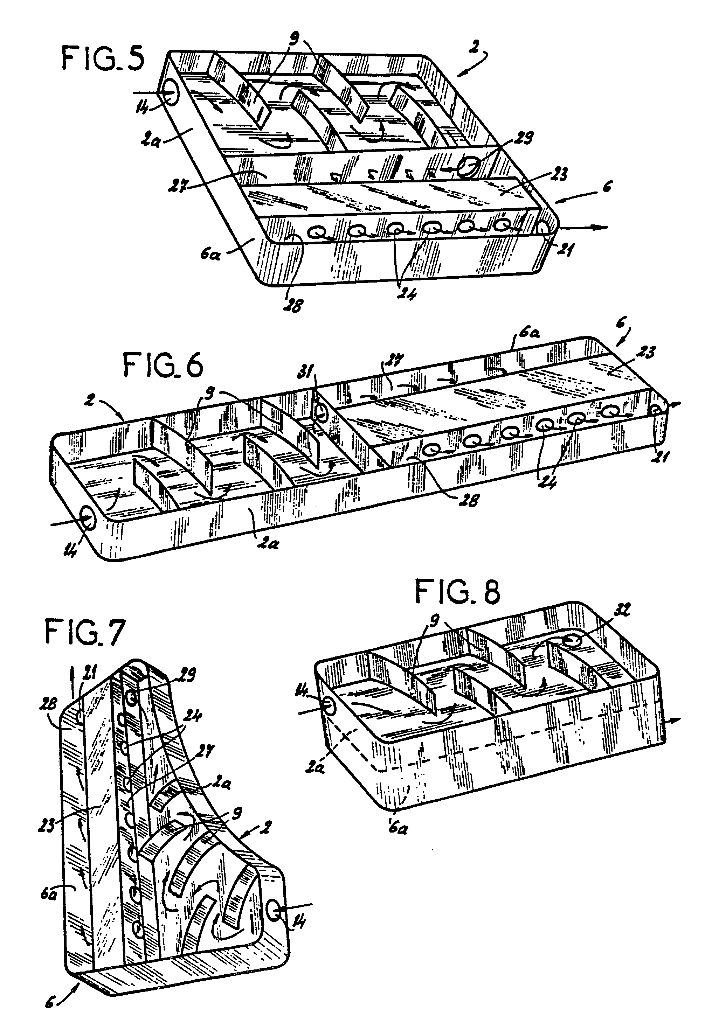

Dans l'exemple illustré par la figure 6, les corps (2a) du pot de détente (2) et (6a) du silencieux (6) sont disposés bout à bout, c'est-à-dire qu'ils présentent une paroi d'extrémité commune comportant, à l'une de ses extrémités, un orifice (31) constituant à la fois l'orifice de sortie du pot de détente et l'orifice d'entrée du silencieux.

La figure 7 est une vue similaire à figure 5, c'est-à-dire dans laquelle le corps (2a) du pot de détente et le corps (6a) du silencieux sont disposés côte à côte mais avec un périmètre adapté à la structure particulière du véhicule auquel il doit être adapte.

Dans tous les exemples qui viennent d'être décrits, et qui sont illustrés par les figures 5 à 7, les couvercles, non représentés sur le dessin, des deux pots peuvent être réalisés en une seule pièce.

Dans l'exemple illustré sur la figure 8, les corps (2a) et (6a) du pot de détente (2) et du silencieux (6) sont superposés, c'est-à-dire qu'ils présentent un fond commun à l'une des extrémités duquel est ménagé un orifice (32) constituant à la fois l'orifice de sortie du pot de détente et l'orifice d'entrée du pot du silencieux. Dans ce cas, naturellement, les couvercles du pot de détente (2) et du silencieux (6) sont indépendants l'un de l'autre, celui du silencieux (6) étant accessible par le bas pour permettre un changement facile de la cartouche interchangeable (23).

## Revendications

1. Dispositif d'échappement pour moteur à combustion interne, du type comprenant une tubulure en acier en plusieurs tronçons (3, 7, 8) reliant entre eux le collecteur d'échappement (4), un premier pot appelé pot de détente (2) contenant des chicanes destinées à créer des turbulences ayant pour effet de ralentir les gaz d'echappement, et un deuxième pot (6) appelé silencieux contenant une matière feutrante, destiné à étouffer le son provoqué par l'évacuation des gaz à l'air libre, et dans lequel au moins le second pot (6) ou silencieux est en une matière moulée résistant à la corrosion des gaz brûlés et à la température, et est équipé d'un couvercle amovible (6b), susceptible de lui être fixé par tout moyen approprié, caractérisé en ce que l'intérieur du deuxième pot (6) ou silencieux est divisé en trois zones une zone centrale destinée à recevoir une cartouche interchangeable (23) de matière feutrante, et deux zones latérales (27) et (28) constituant les collecteurs d'arrivée et de sortie des gaz brûlés, jouant en outre le rôle de résonateurs et dont chacun correspond à un orifice équipé d'un raccord, respectivement d'entrée (19) et de sortie (21).

2. Dispositif d'échappement selon la revendication 1, caractérisé en ce que la matière feutrante est constituée par une cartouche (23) préformée pourvue de canaux transversaux (24) faisant communiquer entre eux les collecteurs (27) et (28), chaque canal étant habillé intérieurement d'un élément tubulaire métallique (25) dont la paroi cylindrique présente des perforations ou lumières (26).

3. Dispositif d'échappement selon les revendications 1 et 2, caractérisé en ce que, d'une part, la masse feutrante de la cartouche interchangeable (23) est imprégnée d'un élément catalyseur de la combustion, dont la fonction est d'assurer la combustion des imbrûlés éventuellement contenus dans les gaz d'échappement, avant la sortie du dispositif d'échappement et sans apport de calories et, d'autre part, les canaux transversaux (24) reliant entre eux les collecteurs d'entrée (27) et de sortie (28) sont fermés à l'une de leurs extrémités de manière qu'une moitié d'entre eux débouche dans le collecteur d'entrée (27) et l'autre moitié dans le collecteur de sortie (28).

4. Dispositif d'échappement selon la revendication 3, caractérisé en ce que les canaux transversaux (24) sont disposés de manière à ce que chaque canal transversal débouchant dans un collecteur (27, 28) soit plus éloigné d'un autre canal transversal (24) débouchant dans le même collecteur (27, 28) que d'un canal transversal (24) débouchant dans l'autre collecteur (28, 27).

5. Dispositif selon la revendication 3, caractérisé en ce que tous les canaux transversaux (24) sont alignés suivant une même rangée et sont disposés de manière à déboucher directement et alternativement dans l'un (27) et dans l'autre (28) collecteurs.

6. Dispositif selon l'une quelconque des revendications précédentes, caractérisé en ce que l'élément catalyseur de la combustion est de la mousse ou du noir de platine.

7. Dispositif selon la revendication 6, caractérisé en ce que la masse feutrante est de la laine de roche imprégnée de mousse de platine.

8. Dispositif selon la revendication 6, caractérisé en ce que la masse feutrante catalytique est de la fibre d'alumine imprégnée de noir de platine.

9. Dispositif selon l'une quelconque des revendications précédentes, caractérisé en ce qu'il est prévu, en amont du logement de la cartouche interchangeable (23), une entrée d'air frais (30).

10. Dispositif selon la revendication 9, caractérisé en ce que l'entrée d'air frais (30) est prévue sur la paroi du collecteur d'entrée (27) du silencieux (6).

11. Dispositif selon la revendication 9, caractérisé en ce que l'entrée d'air frais (30) est prévue en amont du pot de détente (2).

12. Dispositif selon l'une quelconque des revendications 9 à 11, caractérisé en ce que l'entrée d'air frais (30) est agencée pour fonctionner suivant le principe de Venturi.

13. Dispositif selon l'une quelconque des revendications précédentes, caractérisé en ce que la masse feutrante (23) est placée dans un boîtier léger (23a).

**Claims**

1. An exhaust device for an internal combustion engine, of the type comprising a steel tube in several sections (3, 7, 8) connecting together the exhaust manifold (4), a first can called an expansion can (2) containing baffles intended to create turbulance acting to slow the exhaust gasses, and a second can (6) called a silencer can containing a packing material, intended to muffle the sound caused by the expulsion of gasses into the atmosphere, and in which at least the second or silencer can (6) is of moulded material resistant to corrosion from burnt gasses and to temperature, and is equipped with a removable cover (6b) adapted to be fixed thereon by any appropriate means, characterised in that the interior of the second or silencer can (6) is divided into three zones; a central zone intended to receive an interchangeable cartridge (23) of packing material, and two lateral zones (27) and (28) constituting the inlet and outlet collectors for the burnt gasses, serving also as resonatore and of which each corresponds to an orifice having a connector, being respectively an inlet connector (19) and an outlet connector (21).

2. An exhaust device according to Claim 1 characterised in that the packing material is constituted by a preformed cartridge (23) provided with transverse passages (24) establishing communication between the collectors (27) and (28), each passage being fitted internally with a tubular metal element (25) of which the cylindrical wall has perforations or slots (26).

3. An exhaust device according to Claims 1 and 2, characterised in thet, on the one hand, packing mass of the interchangeable cartridge (23) is impregnated with a combustion catalyst material, of which the function is to ensure the combustion of possibly unburnt materials contained in the exhaust gas, before they leave the exhaust device and without the addition of calories, and, on the other hand, the transverse passages (24) connecting together the inlet and outlet collectors (27, 28) are closed at one of their ends in such a manner that half of them open into the inlet collector (27) and the other half into the outlet collector (28).

4. An exhaust device according to Claim 3 characterised in that the transverse passages (24) are arranged in such a manner that each transverse passage opening into a collector (27, 28) is further from another transverse passage (24) opening into the same collector (27, 28) than from a transverse passage (24) opening into the other collector (28, 29).

5. A device according to Claim 3 characterised in that all of the transverse passages (24) are aligned along a same row and are arranged in such a manner as to open directly and alternatively into one collector (27) and the other collector (28).

6. A device according to any one of the preceding claims characterised in that the combustion catalysing material is of platinum foam or black.

7. A device according to Claim 6 characterised in that the packing mass is of rock wool impregnated with platinum foam.

8. A device according to Claim 6 characterised in that the catalytic packing mass is of aluminium fibre impregnated with platinum black.

9. A device according to any one of the preceding claims characterised in that a fresh air inlet (30) is provided up-stream of the housing for the interchangeable (23).

10. A device according to Claim (9) characterised in that the fresh air inlet (30) is provided on the wall of the inlet collector (27) of the silencer (6).

11. A device according to Claim 9 characterized in that the fresh air inlet (30) is provided upstream of the expansion can (2).

12. A device according to any one of Claims 9 to 11, characterised in that the fresh air inlet (30) is arranged to function on the principle of a Venturi.

13. A device according to any one of the preceding claims characterised in that the packing mass (23) is placed in a light-Weight box (23a).

**Patentansprüche**

1. Abgasauslaßeinrichtung für einen Verbrennungsmotor, umfassend eine in mehrere Abschnitte (3, 7, 8) unterteilte Stahlrohrleitung, welche den Abgassamler (4), einen ersten Topf, genannt Rückhaltetopf (2), mit Strömungshindernissen zur Erzeugung von Turbulenzen und damit zur Verlangsamung der Abgase und einen zweiten Topf (6), genannt Geräuschdämpfertopf, mit einer Füllung von verfilzendem Material zur Unterdrückung des durch die Gasentladung in die Atmosphäre hervorgerufenen Schalls miteinander verbindet, wobei zumindest der zweite Topf (6), genannt Geräuschdämpfertopf, aus gegossenem Werkstoff besteht, gegen Korrosion durch die heißen Abgase und gegen die auftretenden Temperaturen beständig ist und einen abnehmbaren Deckel (6b) aufweist, welcher in beliebiger Weise befestigbar ist, dadurch gekennzeichnet, daß der Innenraum des zweiten Topfes (6), genannt Geräuschdämpfertopf, in drei Zonen Unterteilt ist: eine Zentralzone, welche zur Aufnahme einer austauschbaren Patrone von verfilzendem Material geeignet ist und zwei Seltenzonen (27, 28), welche einen Einlaßsammler und einen Auslaßsammler für die heißen Abgase darstellen und im übrigen die Funktion von Resonatoren erfüllen, wobei jede dieser Seitenzonen einer mit einem Anschluß versehenen Öffnung, nämlich einer Einlaßöffnung (19) und einer Auslaßöffnung (21) zugeordnet ist.

2. Einrichtung nach Anspruch 1, dadurch gekennzeichnet, daß das verfilzende Material von einer vorgeformten Patrone (23) gebildet ist, welche mit Querkanälen (24) ausgeführt ist, wobei diese Querkanäle die beiden Sammler, nämlich Einlaßsammler und Auslaßsammler (27 bzw. 28) miteinander verbinden und wobei jeder Kanal innenseitig mit einem Metallrohrelement (25) ausgekleidet ist, dessen zylindrische Wandung Perforationen oder Öffnungen (26) aufweist.

3. Einrichtung nach Anspruch 1 oder 2, dadurch gekennzeichnet, daß zum einen die verfilzende Masse der austauschbaren Patrone (23) mit einem verbrennungskatalytischen Mittel ausgeführt ist, dessen Funktion es ist, die Verbrennung etwaiger unverbrannter Abgasanteile zu gewährleisten, und zwar vor dem Ausgang der Einrichtung und ohne Wärmezufuhr, und daß zum anderen die Querkanäle (24), welche den Einlaßsammler (27) und den Auslaßsammler (28) miteinander verbinden, an jeweils einem Ende abgeschlossen sind, derart, daß ein Teil, vorzugsweise jeweils die eine Hälfte von ihnen, in den Einlaßsammler (27) aus mündet und der andere Teil, vorzugsweise die andere Hälfte, von ihnen in den Auslaßsammler (26) ausmündet.

4. Einrichtung nach Anspruch 3, dadurch gekenzeichnet, daß die Querkanäle (24) in solcher Weise angeordnet sind, daß jeder der in einen der Sammler (27, 28) mündenden Kanäle von einem in den gleichen Sammler (27, 28) mündenden Kanal weiter entfernt ist als von einem in den jeweils anderen Sammler (28, 27) mündenden Querkanal (24).

5. Einrichtung nach Anspruch 3, dadurch gekennzeichnet, daß alle Querkanäle (24) in einer Reihe angeordnet sind, und zwar derart, daß sie abwechselnd in den einen (27) und den anderen (28) der Sammler münden, und zwar direkt.

6. Einrichtung nach einem der vorhergehenden Ansprüche, dadurch gekennzeichnet, daß das verbrennungskatalytische Mittel Platinschwamm oder Platinschwarz ist.

7. Einrichtung nach Anspruch 6, dadurch gekennzeichnet, daß das verfilzende Material Steinwolle ist, welche mit Platinschwamm imprägniert ist.

8. Einrichtung nach Anspruch 6, dadurch gekennzeichnet, daß die verfilzende katalytisch aktivierte Masse aus Aluminiumoxidfaser besteht, welche mit Platinschwarz imprägniert ist.

9. Einrichtung nach einem der vorhergehenden Ansprüche, dadurch gekennzeichnet, daß sie stromaufwärts des Aufnahmebereichs für die austauschbare Patrone (23) einen Frischlufteintritt (30) aufweist.

10. Einrichtung nach Anspruch 9, dadurch gekennzeichnet, daß der Frischlufteintritt (30) an der Wandung des Einlaßsammlers (27) des zweiten Topfes, genannt Geräuschdämpfertopf (6), angeordnet ist.

11. Einrichtung nach Anspruch 9, dadurch gekennzeichnet, daß der Frischlufteintritt (30) stromoberhalb des ersten Topfes, genannt Zurückhaltetopf (2), angeordnet ist.

12. Einrichtung nach einem der Ansprüche 9 bis 11, dadurch gekennzeichnet, daß der Frischlufteinlaß (30) nach dem Funktionsprinzip einer Venturidüse aufgebaut ist.

13. Einrichtung nach einem der vorhergehenden Ansprüche, dadurch gekennzeichnet, daß die vorhhergehende Masse (23) in einem Leichtbaugehäuse (23a) untergebracht ist.

FIG. 3

FIG. 1

FIG. 4

FIG. 2

FIG. 5

FIG. 6

FIG. 7

FIG. 8

5